(19) Europäisches Patentamt
European Patent Office
Office européen des brevets

(11) **EP 4 503 712 A1**

(12) **EUROPEAN PATENT APPLICATION**
published in accordance with Art. 153(4) EPC

(43) Date of publication:
05.02.2025 Bulletin 2025/06

(21) Application number: 23856058.5

(22) Date of filing: 23.03.2023

(51) International Patent Classification (IPC):
*H04W 24/06* (2009.01)

(52) Cooperative Patent Classification (CPC):
G01D 21/02; G01S 1/14; G01S 5/00; G01S 5/02;
G01S 5/08; H04B 17/391; H04W 24/06

(86) International application number:
PCT/CN2023/083516

(87) International publication number:
WO 2024/040962 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.08.2022 CN 202211035098

(71) Applicant: ZTE Corporation
Shenzhen, Guangdong 518057 (CN)

(72) Inventors:
• CHEN, Shijun
  Shenzhen, Guangdong 518057 (CN)
• LI, Junqiang
  Shenzhen, Guangdong 518057 (CN)
• CHEN, Dawei
  Shenzhen, Guangdong 518057 (CN)
• XIA, Shuqiang
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **WIRELESS SENSING METHOD, COMMUNICATION DEVICE, AND STORAGE MEDIUM**

(57) The present application discloses a wireless sensing method, a communication device and a storage medium. The method includes: building a real-time state machine model for a sensing object; and determining an environmental state of the sensing object based on the real-time state machine model.

Build a real-time state machine model for a sensing object — S10

↓

Determine an environmental state of the sensing object based on the real-time state machine model — S20

Fig. 3

EP 4 503 712 A1

## Description

### CROSS-REFERENCE TO RELATED APPLICATIONS

The present application claims priority to Chinese Patent Application No. 202211035098.5, filed on August 26, 2022, the entire contents of which are incorporated herein by reference.

### TECHNICAL FIELD

The present application relates to the field of sensing technology, and in particular to a modeling-based wireless sensing method, a communication device, and a storage medium in the field of terrestrial communication sensing integration.

### BACKGROUND OF THE INVENTION

With the development of technology, the ubiquitous intelligent technology brings great convenience and completely new experience to people's lives, and also deepens into various industries to achieve industrial upgrades through intelligence and improve industrial efficiency.

The ubiquitous intelligence technology mainly encompasses ubiquitous sensing technology, ubiquitous computing technology, and product research and development. In currently deployed ubiquitous systems, ubiquitous sensing and ubiquitous computing are generally achieved through wireless communication networks.

In the traditional sensing field, radar equipment is currently the primary tool. The application scenarios of radar equipment mainly include the perception of aircraft in the air, such as airport radars, and short-range sensing, such as automotive radars. Both of these scenarios are relatively simple. Ubiquitous sensing, on the other hand, needs to be capable of sensing in various complex scenarios, such as indoor multi-path environments, environments with a plurality of buildings and vehicles on the ground, crowded shopping malls, and so on. At present, traditional sensing technologies cannot meet the demands for complex multi-path environments, especially in scenarios with a limited number of antennas and narrow bandwidth.

### SUMMARY OF THE INVENTION

In view of the above technical problems, the embodiments of the present application provide a wireless sensing method, a communication device and a storage medium, to overcome the influence of multipath in complex environments, as well as the inability to effectively achieve wireless sensing when the number of receiver antennas is limited or the bandwidth is narrow, thereby improving the accuracy of wireless sensing in complex environments.

An embodiment of the present application provides a wireless sensing method, including: building a real-time state machine model for a sensing object; and determining an environmental state of the sensing object based on the real-time state machine model.

An embodiment of the present application further proposes a wireless sensing apparatus, including:

a sensing modeling module, configured to build a real-time state machine model for a sensing object; and
a state determination module, configured to determine an environmental state of the sensing object based on the real-time state machine model.

An embodiment of the present application further proposes a communication device including a memory, a processor, and a wireless sensing program stored on the memory and executable on the processor, the wireless sensing program when executed by the processor implementing the wireless sensing method as described above.

An embodiment of the present application further proposes a computer readable storage medium having stored thereon a wireless sensing program that when executed by a processor implements the wireless sensing method as described above.

An embodiment of the present application proposes a wireless sensing method, a communication device and a storage medium. A real-time state machine model is built for a sensing object, and an environmental state of the sensing object is determined based on the real-time state machine model. Thus, by utilizing a wireless sensing method based on real-time modeling of a state machine in complex multipath environments, the problems of multipath interference in complex environments such as indoors urban areas, as well as the inability to effectively achieve wireless sensing when the number of receiver antennas is limited or the bandwidth is narrow, are overcome. This enhances the accuracy of wireless sensing in complex multipath environments.

### BRIEF DESCRIPTION OF DRAWINGS

The accompanying drawings, which are incorporated in and constitute a part of this specification, illustrate embodiments consistent with the present application and together with the specification, serve to explain the principles of the application. In order to more clearly illustrate the technical solutions of the embodiments of the present application, the accompanying drawings required to be used in the description of the embodiments will be briefly described below, and it is obvious to those of ordinary skill in the art that other drawings can be obtained according to these drawings without paying inventive step.

FIG. 1 is a schematic diagram of a hardware structure of a terminal device implementing various embodiments of the present application;

FIG. 2 is an architecture diagram of a communication network system according to an embodiment of the present application;

FIG. 3 is a flowchart illustrating a first embodiment of a wireless sensing method of the present application;

FIG. 4 is a schematic diagram of a scenario according to an embodiment of the wireless sensing method of the present application;

FIG. 5 is a flowchart illustrating a second embodiment of the wireless sensing method of the present application;

FIG. 6 is a deployment diagram of state machines according to an embodiment of the present application;

FIG. 7 is a state machine switching diagram of a room from being unoccupied to occupied and then to unoccupied according to an embodiment of the present application;

FIG. 8 is a principle diagram of differential signal processing and change according to an embodiment of the present application;

FIG. 9 is a schematic diagram of state changes and an environmental state change law after differential signal processing in a scenario according to an embodiment of the present application;

FIG. 10 is a schematic diagram of extracting room state changes based on a room one-day channel model change law in a scenario according to an embodiment of the present application; and

FIG. 11 a schematic diagram of functional modules according to a first embodiment of a wireless sensing apparatus of the present application.

Achievement, functional features and advantages of the present application will be further explained in connection with embodiments thereof, with reference to the accompanying drawings.

DETAILED DESCRIPTION OF THE INVENTION

Reference will now be made in detail to exemplary embodiments, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatuses and methods consistent with some aspects of the present application as detailed in the appended claims.

Herein, the terms "comprise", "comprising", or any other variation thereof, are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the sentence "comprising a..." does not exclude the existence of another identical element in a process, method, article or device including the element. Components, features, and elements with the same names in different embodiments of the present application may have the same meaning or different meanings, and the specific meanings thereof need to be determined by their interpretation in the specific embodiment or further combined with the context in the specific embodiment.

It should be understood that although the terms first, second, third, etc. may be employed herein to describe various information, such information should not be limited to these terms. These terms are only used to distinguish the same type of information from each other. For example, first information could also be termed second information, and, similarly, second information could also be termed first information, without departing from the scope herein. The word "if" as used herein may be interpreted as "upon" or "when" or "in response to determining", depending on the context. Furthermore, as used herein, the singular forms "a", "an" and "the" are intended to include the plural forms as well, unless the context indicates otherwise. It will be further understood that the terms "comprise", "comprising" specify the presence of stated features, steps, operations, elements, components, items, species, and/or groups, but do not preclude the presence, occurrence, or addition of one or more other features, steps, operations, elements, components, items, species, and/or groups. The terms "or", "and/or", "comprising at least one of", and the like, as used herein, may be interpreted as inclusive, or meaning any one or any combination. For example, "comprising at least one of: A, B, C" means "any one of the following: A; B; C; A and B; A and C; B and C; A and B and C", and "A, B, or C" or "A, B, and/or C" means "any one of the following: A; B; C; A and B; A and C; B and C; A and B and C". An exception to this definition will only occur when a combination of elements, functions, steps, or operations are inherently mutually exclusive in some way.

It should be understood that although the various steps in the flowcharts in the embodiments of the present application are shown in sequence as indicated by the arrows, the steps are not necessarily performed in sequence as indicated by the arrows. Except where explicitly stated herein, the steps are performed without a strict order limitation and may be performed in other orders. Moreover, at least some of the steps in the figures may include a plurality of sub-steps or a plurality of stages, these sub-steps or phases are not necessarily performed at the same time, but may be performed at different times, nor is their order of execution necessarily sequential, but may be performed in rotation or alternation with other steps or at least part of the sub-steps or phases of other steps.

The word "if" as used herein may be interpreted as "upon" or "when" or "in response to determining" or "in response to detecting", depending on the context. Similarly, the phrase "if it is determined" or "if (a stated condition or event) is detected" may be construed as "upon determining" or "in response to determining" or "upon detecting (the stated condition or event)" or "in response to detecting (the stated condition or event)", depending on the context.

In one embodiment, step designations, such as S10, S100, etc., are used herein for clarity and simplicity of presentation, and do not constitute a substantial limitation in order.

It should be understood that the specific embodiments described herein are merely illustrative of the present application and are not intended to limit the present application.

In the following description, suffixes such as "module", "component" or "unit" used to denote elements are used only to facilitate the description of the present application, and have no particular meaning per se. Accordingly, "module", "component", or "unit" may be used mixedly.

In the present application, the communication device may be a terminal device, a base station device or the like, which needs to be determined according to the specific context, and if it is a terminal device, the terminal device may be implemented in various forms. For example, the terminal device described in the present application may include a terminal device such as a cell phone, a tablet computer, a notebook computer, a palmtop computer, a Personal Digital Assistant (PDA), a Portable Media Player (PMP), a navigation apparatus, a wearable device, a smart band, a pedometer, and the like, and a fixed terminal such as a base station, a digital TV, a desktop computer, and the like.

The following description will be explained with a terminal device as an example, and it will be understood by those skilled in the art that the configuration according to the embodiments of the present application can be applied to a terminal of a fixed type in addition to elements particularly for mobile purposes.

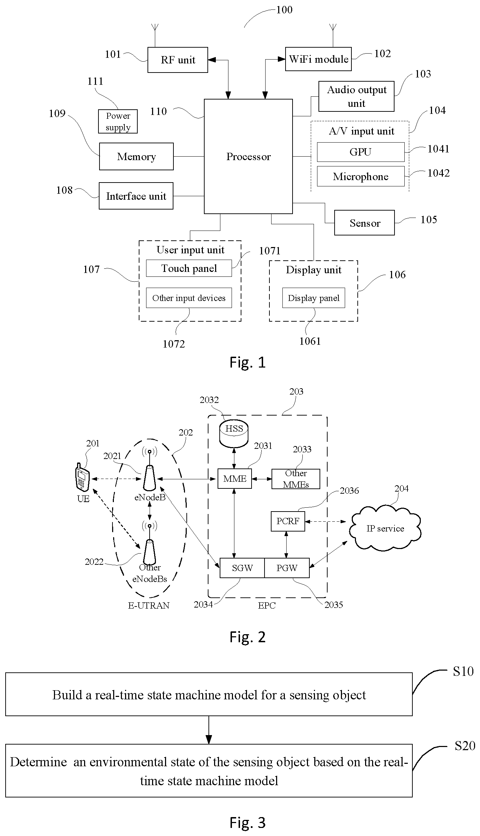

Referring to FIG. 1, which is a schematic diagram of a hardware structure of a terminal device implementing various embodiments of the present application, the terminal device 100 may include components such as an RF (Radio Frequency) unit 101, a WiFi module 102, an audio output unit 103, an A/V (Audio/-Video) input unit 104, a sensor 105, a display unit 106, a user input unit 107, an interface unit 108, a memory 109, a processor 110, and a power supply 111. Those skilled in the art will appreciate that the structure of the terminal device shown in FIG. 1 does not constitute a limitation of the terminal device, and that the terminal device may include more or fewer components than illustrated, or combine certain components, or a different arrangement of components.

Various components of the terminal device are described in detail below in connection with FIG. 1:
The RF unit 101 may be used for receiving and transmitting signals during transmission and reception of information or a call, and in particular, the downlink information from the base station is received and processed by the processor 110; in addition, uplink data is transmitted to the base station. Generally, the RF unit 101 includes, but is not limited to, an antenna, at least one amplifier, a transceiver, a coupler, a low noise amplifier, a duplexer, and the like. In an embodiment, the RF unit 101 may also communicate with networks and other devices through wireless communication. The wireless communication may use any communication standard or protocol, including but not limited to GSM (Global System of Mobile communication), GPRS (General Packet Radio Service), CDMA2000 (Code Division Multiple Access 2000), WCDMA (Wideband Code Division Multiple Access), TD-SCDMA (Time Division-Synchronous Code Division Multiple Access), FDD-LTE (Frequency Division Duplexing-Long Term Evolution), TDD-LTE (Time Division Duplexing-Long Term Evolution), and 5G, etc.

WiFi belongs to short-range wireless transmission technology, the terminal device 100 through the WiFi module 102 can help the user to transceive email, browse web pages and access streaming media, etc., it provides the user with wireless broadband Internet access. Although FIG. 1 illustrates the WiFi module 102, it is understood that it does not belong to an essential constitution of the terminal device, and may be omitted as necessary within a range that does not change the essence of the application.

The audio output unit 103 may convert audio data received by the RF unit 101 or the WiFi module 102 or stored in the memory 109 into an audio signal and output as sound when the terminal device 100 is in a call signal reception mode, a talk mode, a recording mode, a voice recognition mode, a broadcast reception mode, or the like. Also, the audio output unit 103 may also provide an audio output (for example, a call signal reception sound, a message reception sound, or the like) related to a specific function performed by the terminal device 100. The audio output unit 103 may include a speaker, a buzzer, or the like.

The A/V input unit 104 is configured to receive an audio or video signal. The A/V input unit 104 may include a Graphics Processing Unit (GPU) 1041 that processes image data of a still picture or a video obtained by an image capturing device such as a camera in a video capturing mode or an image capturing mode, and a microphone 1042. The processed image frames may be displayed on the display unit 106. The image frames processed by the GPU 1041 may be stored in the memory 109 (or other storage medium) or transmitted via the RF unit 101 or the WiFi module 102. The microphone 1042 may receive sound (audio data) via the microphone 1042 in a phone call mode, a recording mode, a voice recognition mode, or the like operation mode, and can process such sound into audio data. The processed audio (voice) data can be converted into a format output that can be transmitted to the mobile communication base station via the RF unit 101 in the case of a telephone call mode. The microphone 1042 may implement various types of noise cancellation (or suppression) algorithms to cancel (or suppress) noise or interference generated during reception and transmission of audio signals.

The terminal device 100 further includes at least one sensor 105, such as a light sensor, a motion sensor and other sensors. In an embodiment, the light sensor includes an ambient light sensor, which may adjust the brightness of the display panel 1061 according to the light and the dark of the ambient light, and a proximity sensor, which may turn off the display panel 1061 and/or the backlight when the terminal device 100 moves to the ear. As one of the motion sensors, the accelerometer sensor can detect the magnitude of acceleration in all directions (generally three axes), can detect the magnitude and direction of gravity when at rest, can be used for applications for recognition of phone attitude (e.g., landscape switching, related games, magnetometer attitude calibration), vibration recognition related functions (e.g., pedometer, tapping), etc.; the fingerprint sensor, pressure sensor, iris sensor, molecular sensor, gyroscope, barometer, hygrometer, thermometer, infrared sensor, etc., which the cellular phone may also be configured with, will not be described in detail here.

The display unit 106 is configured to display information input by the user or information provided for the user. The display unit 106 may include the display panel 1061, which may be configured in the form of a Liquid Crystal Display (LCD), an Organic Light-Emitting Diode (OLED), or the like.

The user input unit 107 is configured to receive input numeric or character information, and generate key signal input related to user settings and function control of the terminal device. In an embodiment, the user input unit 107 may include a touch panel 1071 and other input devices 1072. The touch panel 1071, also referred to as a touch screen, may collect a touch operation of a user on or near the touch panel 1071 (e.g., an operation of the user on or near the touch panel 1071 using any suitable object or attachment such as a finger, a stylus, etc.) and drive a corresponding connection device according to a preset program. The touch panel 1071 may include two parts of a touch detection device and a touch controller. In an embodiment, the touch detection device detects the touch orientation of the user, and detects a signal brought by the touch operation, and transmits the signal to the touch controller; the touch controller receives touch information from the touch detection device and converts it to contact coordinates for transmission to the processor 110, and can receive commands from the processor 110 and execute them. In one embodiment, the touch panel 1071 may be implemented using a variety of types such as a resistive type, a capacitive type, an infrared ray type, and a surface acoustic wave type. In addition to the touch panel 1071, the user input unit 107 may include another input device 1072. In one embodiment, the input device 1072 may include, but is not limited to, one or more of a physical keyboard, function keys (such as volume control keys, switch keys, etc.), a trackball, a mouse, a joystick, and the like, which is not limited herein.

In an embodiment, the touch panel 1071 may cover the display panel 1061, and when the touch panel 1071 detects a touch operation on or near the touch panel 1071, the touch operation is transmitted to the processor 110 to determine a type of the touch event, and then the processor 110 provides a corresponding visual output on the display panel 1061 according to the type of the touch event. Although the touch panel 1071 and the display panel 1061 are shown in FIG. 1 as two separate components to implement the input and output functions of the terminal device, in some embodiments, the touch panel 1071 and the display panel 1061 may be integrated to implement the input and output functions of the terminal device, which is not limited herein.

The interface unit 108 functions as an interface through which at least one external apparatus can be connected with the terminal device 100. For example, the external apparatus may include wired or wireless headset ports, external power supply (or battery charger) ports, wired or wireless data ports, memory card ports, ports for connecting an apparatus having an identification module, audio input/output (I/O) ports, video I/O ports, earphone ports, and the like. The interface unit 108 may be configured to receive an input (e.g., data information, power, etc.) from an external apparatus and transmit the received input to one or more elements within the terminal device 100 or may be used to transmit data between the terminal device 100 and the external apparatus.

The memory 109 may be configured to store software programs as well as various data. The memory 109 may mainly include a stored program area and a stored data area, and in one embodiment, the stored program area may store an operating system, application programs required for at least one function (such as a sound playing function, an image playing function, etc.), and the like; the storage data area may store data created according to the use of the handset (such as audio data, phonebook, etc.), and the like. In an embodiment, the memory 109 may include a high-speed random access memory, and may also include a non-volatile memory, such as at least one magnetic disk storage device, a flash memory device, or other volatile solid-state memory device.

The processor 110 is a control center of the terminal device 100, the various interfaces and lines are used to connect the various portions of the overall terminal device 100 to perform the overall monitoring of the terminal device 100 by running or executing software programs and/or modules stored in the memory 109 and invoking data stored in the memory 109 to perform various functions of the terminal device 100 and to process data. The processor 110 may include one or more processing units; preferably, the processor 110 integrates an application processor, which mainly processes an operating system, a user interface, an application program, and the like, and a modem processor, which mainly processes wireless communication. It will be appreciated that the modem processor described above may not be integrated into the processor 110.

The terminal device 100 may also include a power source 111 (such as a battery) for powering the various components, and the power source 111 may be logically coupled to the processor 110, preferably through a power management system, to manage charging, discharging, and power consumption management through the power management system.

Although not shown in FIG. 1, the terminal device 100 may further include a Bluetooth module or the like, which will not be described in detail herein.

In order to facilitate the understanding of the embodiments of the present application, the following describes a communication network system on which the terminal device of the present application is based.

Referring to FIG. 2, FIG. 2 is an architecture diagram of a communication network system according to an embodiment of the present application. The communication network system is an LTE system of a general mobile communication technology, and the LTE system includes UE (User Equipment) 201, an E-UTRAN (Evolved UMTS Terrestrial Radio Access Network) 202, an EPC (Evolved Packet Core) 203, and an operator's IP service 204, which are in turn communicatively connected.

In an embodiment, the UE 201 may be the terminal device 100 described above, and will not be repeated here.

The E-UTRAN 202 includes an eNodeB 2021 and other eNodeBs 2022. In an embodiment, the eNodeB 2021 can be connected to the other eNodeBs 2022 through a backhaul (e.g., an X2 interface), the eNodeB 2021 is connected to the EPC 203, and the eNodeB 2021 may provide access from the UE 201 to the EPC 203.

The EPC 203 may include an MME (Mobility Management Entity) 2031, an HSS (Home Subscriber Server) 2032, other MMEs 2033, an SGW (Serving Gate Way) 2034, a PGW (PDN Gate Way) 2035, and a PCRF (Policy and Charging Rules Function) 2036, and the like. In an embodiment, the MME 2031 is a control node that handles signaling between the UE 201 and the EPC 203, providing bearer and connection management. The HSS 2032 is configured to provide registers to manage functions such as a home location register (not shown), and holds some user-specific information about service characteristics, data rates, and the like. All user data may be sent through the SGW 2034, the PGW 2035 may provide IP address allocation of the UE 201 and other functions, and the PCRF 2036 is a policy and charging control policy decision point for traffic data flows and IP bearer resources that selects and provides available policy and charging control decisions for a policy and charging enforcement function (not shown).

The IP service 204 may include the Internet, an intranet, an IMS (IP Multimedia Subsystem), or other IP services, and the like.

Although the LTE system has been described as an example, it should be understood by those skilled in the art that the present application is not only applicable to the LTE system, but also applicable to other wireless communication systems such as GSM, CDMA2000, WCDMA, TD-SCDMA and future new network systems (e.g., 5G), and so on, which is not limited herein.

Various embodiments of the present application have been proposed based on the hardware structure of the terminal device and the communication network system described above.

The main solutions of the embodiments of the present application are: a real-time state machine model for a sensing object is built; and an environmental state of the sensing object is determined based on the real-time state machine model. Accordingly, the wireless sensing method using a real-time modeling state machine for a complex multipath environment overcomes the influence of multipath in complex environments such as an indoor urban area, as well as the inability to effectively achieve wireless sensing when the number of receiver antennas is limited or the bandwidth is narrow, thereby improving the accuracy of wireless sensing in complex environments.

Embodiments of the present application take into account that, in the prior art related solutions, there are a wide variety of actual wireless system device configurations, including massive antennas, and only four antennas; some have good synchronization performance and others have poor synchronization performance; some have large bandwidth, some have small bandwidth and so on. In the case where the number of antennas is relatively small, the angle measurement accuracy is difficult to improve; when the bandwidth is small, ranging accuracy is difficult to improve. Therefore, for complex multipath environments, especially with a small number of antennas and a small bandwidth, the method of sensing with conventional TOA (Time of Arrival) and AOA (Angle of Arrival) measurements can not meet the need.

Therefore, the embodiment of the present application proposes a wireless sensing method of a complex multipath environment using a real-time modeling state machine, which can overcome the influence of multipath in complex environments, such as an indoor urban area, as well as the inability to effectively achieve wireless sensing when the number of receiver antennas is limited or the bandwidth is narrow, thereby improving the accuracy of wireless sensing in complex environments.

In particular, reference is made to FIG. 3, which is a flowchart illustrating a first embodiment of a wireless sensing method of the present application.

As shown in FIG. 3, a first embodiment of the present application proposes a wireless sensing method, including steps S10 and S20.

In S10, a real-time state machine model is built for a sensing object.

Specifically, the system architecture to which the embodiment solution relates includes: a sensing signal transmitting base station and a sensing signal receiving base station.

Wherein, a sensing signal is transmitted by the sensing signal transmitting base station and received by the sensing signal receiving base station.

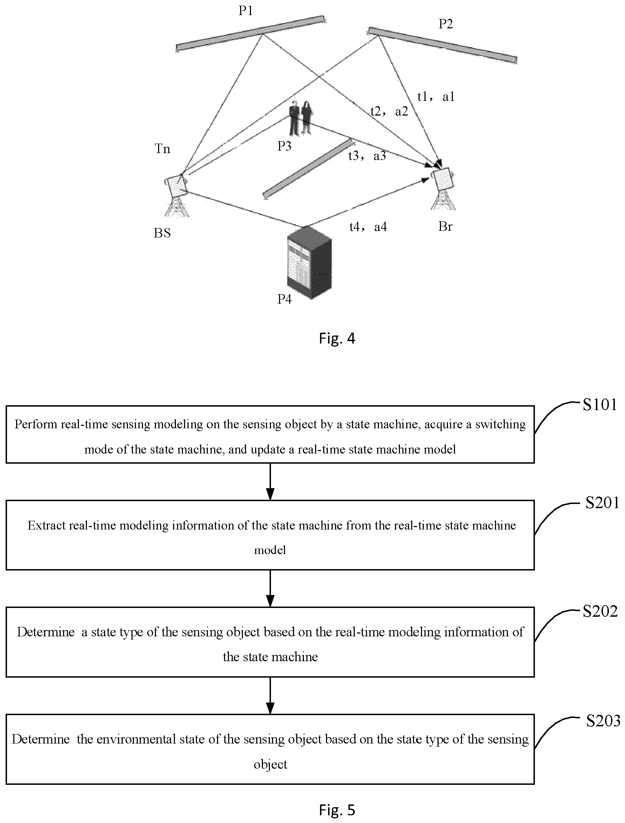

A specific scenario of the present embodiment can be illustrated with reference to FIG. 4.

As shown in FIG. 4, the sensing signal transmitting base station (RS) transmits a sensing signal S at a set time $T_n$ via radio resources, and the sensing signal receiving base station (Br) receives the sensing signal. The sensing signal transmitted by the sensing signal transmitting base station may be reflected by various environmental objects $P_n$ ($P_1$, $P_2$... $P_n$,) in the scenario and projected onto the sensing signal receiving base station.

Channel impulse responses of receiving antennas at different moments are acquired by collecting the sensing signal of each receiving antenna of the sensing signal receiving base station, real-time sensing modeling of the sensing object is performed by a state machine, a switching mode of the state machine is acquired, and a real-time state machine model is updated.

In S20, an environmental state of the sensing object is determined based on the real-time state machine model.

In an embodiment, real-time modeling information of the state machine is extracted from the real-time state machine model;

> based on real-time modeling information of the state machine, a state type of the sensing object is determined; and
> based on the state type of the sensing object, an environmental state of the sensing object is determined.

In an embodiment, the state type of the sensing object includes at least one of:

> the sensing object is unstable in the current state;
> the sensing object is stable in the current state and is changed relative to the last stable state; and
> the sensing object is stable in the current state is not changed relative to the last stable state.

The environmental state of the sensing object can be determined based on the different state types of the sensing object.

In one embodiment, the environmental state of the sensing object may include whether the sensing object has a moving object, and a changing situation of the moving object with respect to the environment, such as whether it is regular or not.

In an embodiment, sensing modeling may be performed on the sensing object based on a state machine, based on a real-time state machine model, real-time modeling information of the state machine is extracted from the real-time state machine model; a state type of the sensing object is determined based on the real-time modeling information of the state machine.

In an embodiment, for the sensing object in an unstable state, differential information between the channel impulse response of the receiving antenna and the current state of the state machine at different moments can be calculated; an environmental state change law of the sensing object is determined according to the differential information.

By the above solution, the present embodiment performs sensing modeling on the sensing object based on the state machine, and based on the real-time state machine model, real-time modeling information of the state machine is extracted from the real-time state machine model; the state type of the sensing object is determined based on the real-time modeling information of the state machine; the environmental state of the sensing object is determined based on the state type, which can overcome the influence of multipath in complex environments, such as an indoor urban area, as well as the inability to effectively achieve wireless sensing when the number of receiver antennas is limited or the bandwidth is narrow, thereby improving the accuracy of wireless sensing in complex environments.

As shown in FIG. 5, the second embodiment of the present application proposes a wireless sensing method, based on the above embodiment shown in FIG. 3, in the present embodiment of the wireless sensing method, the above step S10 of building the real-time state machine model for the sensing object includes a step S101.

In S101, real-time sensing modeling is performed on the sensing object by a state machine, a switching mode of the state machine is acquired, and a real-time state machine model is updated.

Specifically, the sensing signal of the antenna is collected;

> a channel impulse response of the antenna is acquired based on the sensing signal of the antenna; and
> a switching mode of the state machine is acquired based on the channel impulse response of the antenna and current information of the state machine, and the real-time state machine model is updated.

In an embodiment, the current information of the state machine may include a current state, a temporary state, and timer information of the state machine, and the like.

The above Step S20, determining the environmental state of the sensing object based on the real-time state machine model includes steps S201 to S203.

In S201, real-time modeling information of the state machine is extracted from the real-time state machine model;

in an embodiment, the real-time modeling information of the state machine includes at least one of:

a historical switching record of the state machine;
a current state of the state machine;
a temporary state of the state machine; and
timer information of the state machine.

In S202, based on real-time modeling information of the state machine, the state type of the sensing object is determined.

In an embodiment, the state type of the sensing object includes at least one of:

the sensing object is unstable in a current state;
the sensing object is stable in a current state and is changed relative to the last stable state; and
the sensing object is stable in a current state is not changed relative to the last stable state.

In S203, based on the state type of the sensing object, an environment state of the sensing object is determined.

For the sensing object in the unstable state, differential information between the channel impulse response of the antenna and the current state of the state machine at different moments is calculated; and

an environmental state change law of the sensing object is determined according to the differential information.

Specifically, a specific scenario of the present embodiment can be shown with reference to FIG. 4.

As shown in FIG. 4, the sensing signal transmitting base station (RS) transmits a sensing signal S at a set time $T_n$ via radio resources, and the sensing signal receiving base station (Br) receives the sensing signal. The sensing signal transmitted by the sensing signal transmitting base station may be reflected by various environmental objects $P_n$ ($P_1$, $P_2$... $P_n$,) in the scenario and projected onto the sensing signal receiving base station.

Channel impulse responses of the receiving antennas at different moments are acquired by collecting the sensing signal of each receiving antenna of the sensing signal receiving base station, and sensing modeling is performed on the sensing object based on the state machine to determine the state type of the sensing object.

In this embodiment, the state machine may be deployed on the base station or on the server, and this embodiment is not particularly limited thereto.

Wherein, the sensing object refers to a specific environment, such as a room, a parking lot, a mountain area (such as a certain mountain body).

The state machine, endowed with the capability of sensing computing, represents the switching relationships among various stable states, which encompasses the states themselves and the maintained state transition relationships. Input of the state machine consists of sensing signals, while output thereof reflect the status of state switching. The state machine is provided with a timer, the information in the state machine includes: switching information (or historical switching records), current state, temporary state, and timer information of the state machine. The switching information of the state machine includes, but is not limited to, the time, the number, and the states before and after switching.

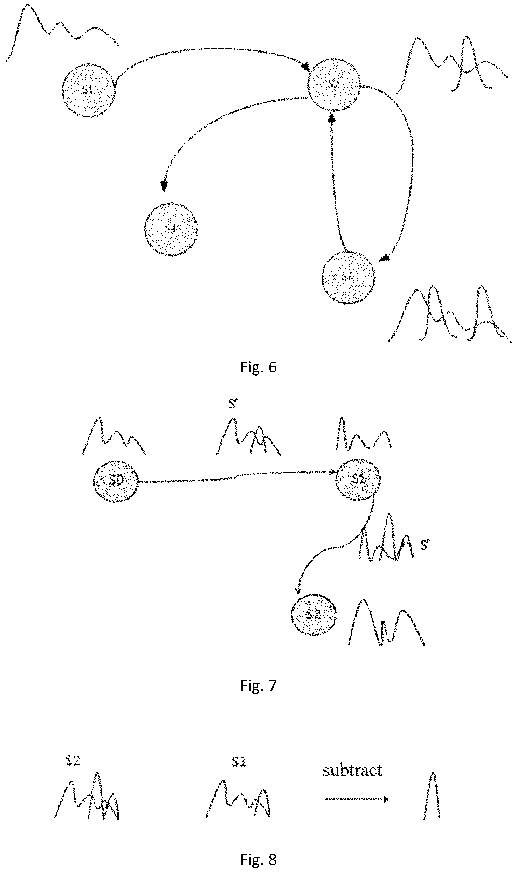

Wherein, there can be one or more state machines, and a deployment schematic diagram can refer to FIG. 6. The process of real-time updating of the state machine is essentially the process of real-time modeling. A single receiving base station can correspond to one or a plurality of state machines, and similarly, a single receiving antenna can correspond to either one or a plurality of state machines, without limitation to the present embodiment.

Specifically, the sensing signal receiving base station receives the sensing signal, samples the sensing signal for each receiving antenna, and acquires a channel impulse response vector $R_{m.n}(t)$ for each receiving antenna at a corresponding moment according to the sampled signals, wherein m, n are the oscillator numbers in the antenna array, $m \in [0,M-1]$, $n \in [0, N-1]$, M and N are integers greater than 1, and t is time.

As shown in FIG. 6, a state machine set is denoted as S(K), and the initial state of the state machine S(0) is set to be the current channel impulse response vector, i.e. $R_{m.n}(t)$. K is the total number of states, K is an integer, S' is the temporary state of the state machine, K' is the current state number, and K' is an integer.

In the initial state, the initial state S(0) is the current state, the initial value of K is 0, and the temporary state is S' = S(0), with K' = K, and the switching information of the state machine at the current moment is recorded, i.e., whether the state machine has switching, if yes, it should be recorded from which state to which state, the switching information of the state machine includes, but is not limited to, the time, the number, and the states before and after the switching.

Wherein, the state of the state machine corresponds to a stable radio propagation environment, and the value of each state corresponds to a stored channel impulse response value for a stable receiving antenna.

The temporary state of the state machine is introduced in order to find another stable state after the current stable state, the value of the temporary state is changed to a new channel impulse response value of the receiving antenna when an environmental change is detected.

In the initial state, the timer C is set to 0 and starts counting.

Wherein, the state type of the sensing object may include the following.

First: the sensing object is unstable in the current state, for example, the state of the sensing object is judged to be constantly changing through the record information of the state machine, and is unstable in the current state, such as the scenarios where the landslide occurs, people continuously talk or move during a meeting in a conference room, or cars continuously enter and leave a parking lot.

Second: the sensing object is stable in the current state and is changed relative to the last stable state, as shown in FIG. 7, which is a state machine switching diagram of a room from being unoccupied to occupied and then to unoccupied.

For example, the conference room transitions from an unoccupied scenario (S0) where no one is holding a meeting to an occupied scenario (S1) during a meeting, and then from the occupied scenario (S1) during a meeting to an unoccupied scenario (S2) after the meeting ends, wherein S' represents the temporary state of the state machine.

For the state machine, both states S2 and S1 can be considered as stable states. However, there might be changes in the furniture arrangement, such as the tables and chairs, in the conference room before and after the meeting. This makes the two states, S2 and S1, different. In the current state S2, the conference room is stable but has undergone a change relative to the last stable state S1. Consequently, by tracking all state machines and their switching moments, the state information of the state machines can be extracted.

Third: the sensing object is stable in the current state and is not changed relative to the last stable state, i.e. the environment is always in a stable state with no change.

In an embodiment, real-time sensing modeling may be performed on the sensing object by a state machine, real-time modeling information of the state machine is extracted from a real-time state machine model; a state type of the sensing object is determined based on the real-time modeling information of the state machine, and an environmental state of the sensing object is determined based on the state type of the sensing object.

In an embodiment, the real-time modeling information of the state machine may include at least one of:

the switching information of the state machine;
the current state of the state machine: such as the stable state before people enter the conference room;
the temporary state of the state machine, which can be used to identify the stable state; and
the timer information of the state machine.

In the above solution, the state type of the sensing object is determined according to the real-time modeling information of the state machine, and the determination of the state type may be performed during or after state S1.

Scenarios are exemplified as follows:

Scenario 1: if the timer C is smaller than the preset time threshold value 1, it is determined that someone enters the room and is active; and
whether there is an environmental change in the scenario is determined, and it is determined that someone enters the room and leaves and the environmental change occurs according to room state machine transition; as shown in FIG. 7.
Scenario 2: a mountain scenario landslide state is judged, according to the mountain pre-landslide state, if the state machine timer C is smaller than the preset time threshold value 1, it is determined to be risky; if the state machine switches to another stable state, it is determined that the landslide is completed.

Differential information between the channel impulse responses of the antenna and the current states of the state machine at different moments is calculated for the sensing object in an unstable state; an environmental state change law of the sensing object is determined according to the differential information.

The present embodiment mainly makes sensing determination on the environmental state change law of the sensing object in an unstable state.

In one embodiment, as a mode of implementation, for the sensing object in an unstable state, the channel impulse responses of the receiving antenna and the current states corresponding to the state machine at different moments are acquired; and differential information between the channel impulse response of the receiving antenna and the current state corresponding to the state machine at different moments is calculated.

Specifically, at a current moment, the channel impulse response of the receiving antenna and the current state corresponding to the state machine at the current moment are acquired; and differential information between the channel impulse response of the receiving antenna and the current state corresponding to the state machine at the current moment is calculated, as shown in FIG. 8.

The processed signal information is acquired as:

$$\Delta_{m,n}(t) = R_{m,n}(t) - S(k') ;$$

$\Delta_{m,n}(t)$ is the differential information between the channel impulse response $R_{m,n}(t)$ of the receiving antenna and the current state $S(K')$ corresponding to the state machine at the current moment t.

Then, the channel impulse response at the next moment is received, the above process is repeated to acquire the differential information between the channel impulse responses of the receiving antenna and the current states corresponding to the state machine at different moments, and then each $\Delta_{m,n}(t)$ can be analyzed to acquire signal features such as cycle information and the like, thereby analyzing the real-time changing signal information to acquire the environmental state change law of the sensing object.

In an embodiment, the differential information is analyzed to extract differential signal features in the differential information, the differential signal features including, but not limited to, phase, amplitude, time period, and the like;

a state change curve is plotted based on the differential signal features; and
an environmental state change law of the sensing object is determined according to the state change curve.

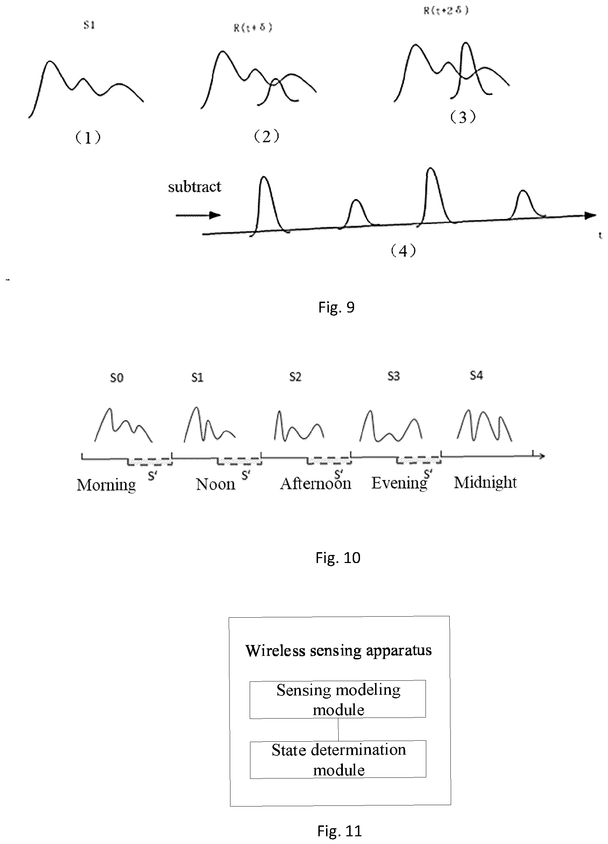

Examples of scenarios are as follows: for instance, the breathing signals of people in a room are sensed, and analyzed to obtain the breathing patterns of those people. This, in turn, derives the state change law when someone is present in the room. Wherein, the environmental state change law after differential signal processing can refer to FIG. 9.

For another example, after the machines in a factory are turned on, the sound signals emitted by the machines in the factory can be sensed and analyzed to determine whether the movements or sounds of the machines are regular. Both can yield judgment results through the aforementioned method.

A real-time state machine model is built for a sensing object, the environmental state of the sensing object is determined based on the real-time state machine model, specifically, which involves acquiring a sensing signal of an antenna; a channel impulse response of the antenna is acquired based on the sensing signal of the antenna; a switching mode of a state machine is acquired based on the channel impulse response of the antenna and the current information of the state machine (the current state, temporary state, timer information), and the real-time state machine model is updated; the real-time modeling information of the state machine is extracted from the real-time state machine model; based on real-time modeling information of the state machine, the state type of the sensing object is determined; based on the state type of the sensing object, an environmental state of the sensing object is determined; wherein, for a sensing object in an unstable state, the differential information between the channel impulse response of the receiving antennas and the current state corresponding to the state machine at different moments is calculated; according to the differential information, the environmental state change law of the sensing object is obtained through analysis. Thus, by utilizing a wireless sensing method based on real-time modeling of a state machine in complex multipath environments, the problems of multipath influence in complex environments such as an indoor urban area, as well as the inability to effectively achieve wireless sensing when the number of receiver antennas is limited or the bandwidth is narrow, are overcome. This enhances the accuracy of wireless sensing in complex multipath environments.

More specifically, the following elaborates on the detailed solution of performing real-time sensing modeling on the sensing object through a state machine, extracting real-time modeling information of the state machine from the real-time state machine model, and determining the state type of the sensing object based on the real-time modeling information of the state machine.

Taking the scenario shown in FIG. 4 as an example, the sensing signal transmitting base station (RS) transmits a sensing signal S at a set time $T_n$ via radio resources, and the sensing signal receiving base station (Br) receives the sensing signal. The sensing signal transmitted by the sensing signal transmitting base station may be reflected by various environmental objects $P_n$ ($P_1$, $P_2$... $P_n$,) in the scenario and projected onto the sensing signal receiving base station.

Channel impulse responses of the receiving antenna at different moments are acquired by collecting the sensing signal of each receiving antenna of the sensing signal receiving base station, and sensing modeling is performed on the sensing object based on the state machine (abbreviated as a state machine in the following specific embodiments) to determine the state type of the sensing object.

Specifically, the sensing signal receiving base station receives the sensing signal, samples the sensing signal for each receiving antenna, and acquires a channel impulse response vector $R_{m,n}(t)$ for each receiving antenna at a corresponding moment according to the sampled signals, wherein m, n are oscillator numbers in the antenna array, $m \in [0, M - 1]$, $n \in [0, N - 1]$, M and N are integers greater than 1, and t is time.

As shown in FIG. 6, a state machine set is denoted as S(K), and the initial state S(0) of the state machine is set to be the current channel impulse response vector, i.e. $R_{m,n}(t)$. K is the total number of states, K is an integer, S' is the temporary state of the state machine, K' is the current state number, and K' is an integer.

In the initial state, the initial state S(0) is the current state, the initial value of K is 0, and the temporary state is S' = S(0), with K' = K, and the switching information of the state machine at the current moment is recorded, i.e., whether the state machine has switching, if yes, it should be recorded from which state to which state, the switching information of the state machine includes, but is not limited to, the time, the number, and the states before and after the switching.

Wherein, the state of the state machine corresponds to a stable radio propagation environment, and the value of each state corresponds to a stored channel impulse response value for a stable receiving antenna.

The temporary state of the state machine is introduced in order to find another stable state after the current stable state, the value of the temporary state being changed to a new channel impulse response value of the receiving antenna when an environmental change is detected.

In the initial state, the timer C is set to 0 and starts counting. The timer C is set with a certain time-out duration, and when the time-out duration is reached and a switching condition is reached, the state machine will perform a switching operation. Additionally, regardless of whether the timer's time-out duration has been reached, if a reset condition is satisfied, the timer will be reset. The specific actions of the timer may vary depending on different scenarios, and detailed explanations regarding the timer in relation to different switching types of the state machine will be provided later.

In an embodiment, performing real-time sensing modeling on the sensing object by the state machine, acquiring the switching mode of the state machine, and updating the real-time state machine model includes:

a sensing signal of an antenna is collected;

a channel impulse response of the antenna is acquired based on the sensing signal of the antenna; and

the switching mode of the state machine is acquired based on the channel impulse response of the antenna and current information (the current state, the temporary state, and the time information) of the state machine, and the real-time state machine model is updated.

In an embodiment, acquiring the switching mode of the state machine based on the channel impulse response of the antenna and the current information of the state machine includes:

a current state, a temporary state, and timer information of the state machine are recorded; and

the switching mode of the state machine is acquired based on the channel impulse response of the antenna as well as the current state, the temporary state and the timer information of the state machine.

Taking the current moment as an example, the sensing signal receiving base station receives the sensing signal, samples the sensing signal for each receiving antenna, and acquires the channel impulse response $R_{m,n}(t)$ for the receiving antenna at the current moment based on the sensing signal of the receiving antenna.

Then, the current state, temporary state, timer information of the state machine at the current moment are recorded;

the switching mode of the state machine at the current moment is determined based on the channel impulse response of the receiving antenna at the current moment as well as the current state, the temporary state, and the timer information of the state machine at the current moment; and

in an embodiment, the state of the state machine is updated in real time based on the switching mode of the state machine at the current moment.

That is, the switching mode of the state machine is determined and sensed according to the channel impulse response $R_{m,n}(t)$ of the receiving antenna at the current moment, the current state (S(K')), the temporary state (S'(K')), and the timer C, and a corresponding operation (e.g., no switching, switching to a new state, or switching to a previously existing state) is performed, to complete updating of the real-time modeling sensing state machine at the current moment, wherein the real-time updating of the state machine is the real-time modeling process.

The state type of the sensing object can then be determined based on the state update change of the state machine and the current count of the timer.

In an embodiment, determining the state type of the sensing object based on the real-time modeling information of the state machine may include:

the state type of the sensing object is determined based on the historical switching record, the current state, the temporary state, and the timer information of the state machine.

In an embodiment, the step of updating the real-time state machine model includes:

an update operation is performed on the real-time state machine model based on the switching mode of the state machine.

In an embodiment, operating the real-time state machine model based on the switching mode of the state machine includes at least one of:

corresponding to that the state machine maintains the current state, upon the condition that the channel impulse response of the antenna at the current moment is not similar to the temporary state of the state machine at the current moment, the temporary state of the state machine is updated to the channel impulse response of the antenna at the current moment and a timer is reset;

corresponding to that the state machine maintains the current state, upon the condition that the channel impulse response of the antenna at the current moment is similar to the temporary state of the state machine at the current moment, the timer is kept counting;

corresponding to that the state machine switches to the historical existing state, a switching operation of the state machine is performed, the temporary state and the current state number are changed to the state and the number corresponding to the maximal similarity existing in the state machine,, the timer is not reset, and switching information of the state machine is recorded; and

corresponding to that the state machine switches to a new state, a new state generating operation and a switching operation of the state machine are performed, the timer is not reset, and switching information of the state machine is recorded.

In an embodiment, the method further includes saving a current state of the state machine.

In an embodiment, the state type of the sensing object includes at least one of:

the sensing object is unstable in the current state;
the sensing object is stable in the current state and is changed relative to the last stable state; and
the sensing object is stable in the current state and is not changed relative the last stable state.

In particular, the state types of the sensing object include:

First: the sensing object is unstable in the current state, for example, the state of the sensing object is judged to be constantly changing through the record information of the state machine, and is unstable in the current state, such as the scenarios where the landslide occurs, people continuously talk or move during a meeting in a conference room, or cars continuously enter and leave a parking lot.

Second: the sensing object is stable in the current state and has a change relative to the last stable state. For example, the conference room transitions from an unoccupied scenario (S0) where no one is holding a meeting to an occupied scenario (S1) during a meeting, and then from the occupied scenario (S1) during a meeting to an unoccupied scenario (S2) after the meeting ends. For the state machine, both states S2 and S1 can be considered as stable states. However, there might be changes in the furniture arrangement, such as the tables and chairs, in the conference room before and after the meeting. This makes the two states, S2 and S1, different. In the current state S2, the conference room is stable but has undergone a change relative to the last stable state S1. Consequently, by tracking all state machines and their switching moments, the state information of the state machines can be extracted.

Third: the sensing object is stable in the current state with no change relative to the last stable state, i.e. the environment is always in a stable state with no change.

Thus, the state type of the sensing object is determined by collecting the sensing signal of each receiving antenna of the sensing signal receiving base station, acquiring the channel impulse response of the receiving antenna at different moments, and performing sensing modeling on the sensing object based on the state machine.

In an embodiment, the switching mode of the state machine includes at least one of:

maintaining a current state;
switching to a historical existing state (switching to a similar state); and
switching to a new state.

In an embodiment, prior to the acquiring the switching mode of the state machine, the method further includes:
a switching mode of the state machine is determined.

In an embodiment, a mode for determining that the state machine maintains a current state includes at least one of:

a count value of the timer does not exceed a set time threshold value;
the channel impulse response of the antenna at the current moment is not similar to the temporary state of the state machine at the current moment, and the timer is reset; and
the channel impulse response of the antenna at the current moment is similar to the temporary state of the state machine at the current moment, and the timer continues to keep counting.

In an embodiment, a mode for determining that the state machine switches to a historical existing state includes at least one of:

a count value of the timer exceeds a set time threshold value;
the channel impulse response of the antenna at the current moment is similar to the temporary state of the state machine at the current moment, and the temporary state is not similar to the current state;
all states saved in the state machine are traversed, the similarity between the temporary state and each state saved in the state machine is compared, there exists a situation where one or more states in the saved states exhibit similarity to the temporary state;
the temporary state and the current state number are changed into the state and the number corresponding to the maximal similarity existing in the state machine respectively; and
the timer is not reset.

In an embodiment, a mode for determining that the state machine switches to a new state includes at least one of:

a count value of the timer exceeds a set time threshold value;

the channel impulse response of the receiving antenna at the current moment is similar to the temporary state of the state machine at the current moment, and the temporary state is not similar to all the states saved in the state machine, the state machine generates a new state, and switches to the new state; and

the timer is not reset.

The three switching modes of the state machine are described in detail below:

The first switching mode: the current state is maintained without switching.

The switching mode of the state machine at the current moment is determined to maintain the current state without switching through the following steps:

if, based on the timer information, it is determined that the count value of the timer C does not exceed the set time threshold value 1, then whether the channel impulse response $R_{m.n}(t)$ of the receiving antenna at the current moment is similar to the temporary state S' of the state machine at the current moment is determined;

if the channel impulse response $R_{m.n}(t)$ of the receiving antenna at the current moment is not similar to the temporary state S' of the state machine at the current moment, the temporary state S' is updated as the channel impulse response $R_{m.n}(t)$ of the receiving antenna at the current moment, the timer C is reset to zero, and the state machine is maintained in the current state at the current moment without switching; and

if the channel impulse response $R_{m.n}(t)$ of the receiving antenna at the current moment is similar to the temporary state S' of the state machine at the current moment, the timer C continues to keep counting, and the state machine is maintained in the current state at the current moment without switching.

The second switching mode: the state machine switches to a historically existing state or switches to a similar state.

The switching mode of the state machine at the current moment is determined to switch to a historically existing state or a similar state through the following steps:

if, based on the timer information, it is determined that the count value of the timer C exceeds the set time threshold value 1, then whether the channel impulse response $R_{m.n}(t)$ of the receiving antenna at the current moment is similar to the temporary state S' of the state machine at the current moment is determined, and also whether the temporary state S' is similar to the current state S is determined;

if the channel impulse response $R_{m.n}(t)$ of the receiving antenna at the current moment is similar to the temporary state S' of the state machine at the current moment, and the temporary state S' is not similar to the current state S, then all current states S(K) saved in the state machine are traversed, the similarity between the temporary state S' and each current state S(i) is compared, wherein i ≤ K; and

if there exists a situation where one or more states in the saved states S(K) exhibit similarity to the temporary state S', then it is determined that the switching mode of the state machine at the current moment is to switch to a historically existing state. The temporary state and the current state number are respectively changed to the state and the number $i_{max}$ corresponding to the maximal similarity existing in the state machine, i.e., S'(K') = S($i_{max}$), K' = $i_{max}$;

the timer C is not reset, and the switching information of the state machine is recorded.

The third switching mode: the state machine switches to a new state.

The switching mode of the state machine at the current moment is determined to switch to the new state through the following steps:

if, based on the timer information, it is determined that the count value of the timer C exceeds the preset time threshold value 1, then whether the channel impulse response $R_{m.n}(t)$ of the receiving antenna at the current moment is similar to the temporary state S' of the state machine at the current moment is determined, and whether the temporary state S' is similar to all the current states S(K) saved in the state machine is determined; and

if the channel impulse response $R_{m.n}(t)$ of the receiving antenna at the current moment is similar to the temporary state S' of the state machine at the current moment, and the temporary state S' is not similar to all the current states S(K) saved in the state machine, a new state is generated. The switching mode of the state machine at the current moment is determined to switch to the new state, and the state number is updated as K=K+1. The new state S(K) in the state set is updated as S(K)=S', and the current state and the temporary state are consistent as S'=S(K), and K'=K.

The timer is not reset and the switching information of the state machine is recorded.

As an embodiment, in the above solutions, the step of determining whether the channel impulse response of the receiving antenna at the current moment is similar to the temporary state of the state machine at the current moment includes:

the similarity between the channel impulse response of the receiving antenna at the current moment and the temporary state of the state machine at the current moment is calculated;

if the similarity does not exceed a preset similarity threshold value, it is determined that the channel impulse response of the receiving antenna at the current moment is not similar to the temporary state of the state machine at the current moment;

otherwise, it is determined that the channel impulse response of the receiving antenna at the current moment is similar to the temporary state of the state machine at the current moment.

Wherein, calculating the similarity between the channel impulse response of the receiving antenna at the current moment and the temporary state of the state machine at the current moment includes, but is not limited to, the following solution:

     1. A correlation value between the channel impulse response $R_{m,n}(t)$ of the receiving antenna at the current moment and the temporary state S' of the state machine at the current moment is calculated, and a maximum correlation peak is taken as a similarity contrast; and

     2. An included angle between the channel impulse response $R_{m,n}(t)$ of the receiving antenna at the current moment and the temporary state S' of the state machine at the current moment is calculated, and the cosine of the included angle is taken as a similarity contrast.

The determination of whether the states are similar includes setting a similarity threshold 2. In response to determining that the similarity exceeds the preset similarity threshold 2, the states are judged to be similar; otherwise, the states are judged to be not similar.

Based on the above solution, all state machine switching information can be tracked, and the state information can be extracted as needed, which includes, but is not limited to:

for indoor scenarios, the state with minimal changes within a time threshold can be extracted as an unoccupied state.

For general scenarios, the switching information of the state machine arranged chronologically within a day can be extracted to represent the scenario changes throughout the day, and laws can be analyzed to obtain the state change laws in different environments, as illustrated in FIG. 10, which is a schematic diagram of one-day channel model changes of a room.

The detailed description of specific implementations of the present embodiments is further elaborated below in connection with different scenarios:

Scenario 1

When the room's state changes from being unoccupied to occupied and then back to unoccupied, the state changes are illustrated in FIG. 7. The specific implementation process is as follows:

The synchronized sensing signal transmitting base station transmits the sensing signal at a set time via radio resources, and the sensing signal receiving base stations receive the sensing signal. The sensing signal of each antenna is sampled, and based on the sampled signal, the channel impulse response vector $R_{m,n}(t)$ for each receiving antenna is acquired. The initial state is set to be S(0), the temporary state S' is set to be S' = S(0), K' = K, and the timer starts at 0. At this point, the room is in the state S(0), as shown in FIG. 7.

If $R_{m,n}(t)$ is not similar to S', then C = 0 (i.e., being reset), otherwise C is not reset.

The timer C's value is compared with a time threshold value 1. If the timer C exceeds the set state threshold 1 and the temporary state S' is not similar to any one of the states S(K) already saved in the state machine, a new state is generated. This means that the state number is updated as K = 0 + 1, the new state S(K) in the state set is updated as S(1) = S', and the current state and the temporary state are both set to be S' = S(1), with K' = 1, indicating that the room is in the S(0) state, and is finally in the stable state of being unoccupied, which is S(1).

Similarly, as shown in FIG. 7, when the state changes from S(1) to S(2), the state number is updated as K = 1 + 1, and the new state S(K) in the state set is updated as S(2) = S'. The current state and the temporary state are both set to be S' = S(2), with K' = 2, indicating that the room is in the stable S(1) state, and then people enter the room and begin activities, causing the temporary state S' to constantly change until it finally reaches the unoccupied stable state of S(2) again.

Scenario 2

When breathing monitoring is conducted for people in a room, the state changes are illustrated in FIG. 9. The specific implementation process is as follows: the synchronized sensing signal transmitting base station transmits the sensing signal at the set time via the radio resources, and the sensing signal receiving base station receives the sensing signal. Sampling of the sensing signal from each antenna is performed, and based on the sampled signal, the channel impulse response vector $R_{m,n}(t)$ for each antenna is obtained. The initial state is set to be S(0), the temporary state is set to be S' = S(0), with K' = K. The timer C starts counting from 0, at which point the room is in the S(0) state.

If $R_{m,n}(t)$ is not similar to S', C = 0, i.e., the timer is reset, otherwise C is not reset.

The timer C's value is compared with a time threshold value 1. If the timer C exceeds the set time threshold value 1 and the temporary state S' is not similar to any one of the states S(K) already saved in the state machine, a new state is generated. This means that the state number is updated as K = 0 + 1, the new state S(K) in the state set is updated as S(1) = S', and the current state and the temporary state are both set to be S' = S(1), with K' = 1, indicating that the target is in the S(1) state from the S(1) state. The processed signal corresponds to (1) in FIG. 9.

After someone enters the room, if $R_{m,n}(t)$ is not similar to S', C is set to 0, and the room remains in S1.

Upon receiving $R_{m,n}(t)$ in real-time, a differential signal is obtained:

$$\Delta_{m,n}(t) = R_{m,n}(t) - S(k')\ ;$$

and

by continuously recording and analyzing the differential signal, a regular signal emerges as shown in (4) of FIG. 9.

By repeatedly performing the above process, the processed state signals can be obtained, and from these processed sensing signals, the changes in human breathing can be analyzed.

Scenario 3

Based on the daily changing law of the channel model within the room, the changes in room state can be extracted as illustrated in FIG. 10. The specific implementation process is as follows:

the synchronized sensing signal transmitting base station transmits the sensing signal at the set time via the radio resources, and the sensing signal receiving base station receives the sensing signal. The sensing signal from each antenna is sampled, and based on the sampled signal, the channel impulse response vector $R_{m,n}(t)$ for each antenna is obtained. The initial state is set to be S(0), the temporary state is set to be S' = S(0), with K' = K. The timer C starts counting, at which point the room is in the stable S(0) state in the morning, as illustrated in FIG. 10.

The timer C's value is compared with a threshold value. If the timer C exceeds the set threshold value 1 and the temporary state S' is not similar to any one of the states S(K) already saved in the state machine, a new state is generated. This means that the state number is updated as K = 0 + 1, the new state S(K) in the state set is updated as S(1) = S', and the current state and the temporary state are both set to be S' = S(1), with K' = 1. This indicates that during a certain period in the morning, the room's state transitions from the stable state S(0) to another stable state S(1) after undergoing an active period. The dashed box in FIG. 10 represents the temporary active state S' during this transition.

As depicted in FIG. 10, when the counter C's value exceeds the preset time threshold value 1, the state transitions from S(1) to S(2). Subsequently, all the states S(K) already saved in the state machine are traversed, that is, the similarity between S' and S(0), S(1) is compared. If no similar state is found, the state number is updated as K = 1 + 1, and the new state S(K) in the state set is updated as S(2) = S'. Both the current state and the temporary state are then synchronized as S' = S(2), with K' = 2. This indicates that during a certain period in the afternoon, the room's state transitions from the stable state S(1) to another stable state S(2) after undergoing an active period.

Additionally, when the counter C's value exceeds the set time threshold value 1, and the state transitions from S(2) to S(3), a traversal is again performed on all the states S(K) within the saved state machine. This involves comparing the similarity between S' and S(0), S(1), S(2). If no similar state is found, the state number index is updated as K = 2 + 1, and the new state S(K) in the state set is updated as S(3) = S'. Both the current state and the temporary state are then synchronized as S' = S(3), with K' = 3. This indicates that during a certain period in the afternoon, the room's state transitions from the stable state S(2) to another stable state S(3) after undergoing an active period.

As shown in FIG. 10, at this point, the temporary state is S' = S(3) with K' = 3. When the counter C's value exceeds the preset time threshold value 1, and the current $R_{m,n}(t)$ is similar to the temporary state S', but S' is not similar to the current state S, all the states S(K) saved within the state machine are traversed. This involves comparing the similarity between S' and S(0), S(1), S(2), and S(3). If no similar state is found, the state number index is updated as K = 3 + 1, and the new state S(K) in the state set is updated as S(4) = S'. Both the current state and the temporary state are then synchronized as S' = S(4), with K' = 4. This indicates that during a certain period in the afternoon, the room's state transitions from the stable state S(3) to another stable state S(4) after undergoing an active period.

In contrast to the prior art, the present embodiment solution builds the real-time state machine model for the sensing object; and based on the real-time state machine model, determines an environmental state of the sensing object, thereby being able to address state sensing and sensing signal analysis of complex environments, identify different steady state features of the environment, identify environmental real-time changes, and associate a state machine and an actual scenario state type. By utilizing a wireless sensing method based on real-time modeling of a state machine in complex multipath environments, the problems of multipath interference in complex environments such as indoors urban areas, as well as the inability to effectively achieve wireless sensing when the number of receiver antennas is limited or the bandwidth is narrow, are overcome. This enhances the accuracy of wireless sensing in complex multipath environments.

As shown in FIG. 11, an embodiment of the present application further proposes a wireless-sensing device, including: a type determination module, configured to determine a state type of a sensing object based on sensing modeling; and

an environment state determination module, configured to determine an environment state of the sensing object based on the state type.

The principle and implementation of the present embodiment to implement wireless sensing are referred to above embodiments, which will not be described in detail here.

Further, an embodiment of the present application proposes a wireless sensing apparatus, including:

a sensing modeling module, configured to build a real-time state machine model for a sensing object; and
a state determination module, configured to determine an environmental state of the sensing object based on the real-time state machine model.

For the principle of realizing sensing by the embodiment, please refer to the above embodiments, which will not be described in detail here.

Furthermore, an embodiment of the present application proposes a communication device including a memory, a processor, and a wireless sensing program stored on the memory and executable on the processor, the wireless sensing program when executed by the processor implementing the wireless sensing method according to the above embodiments.

Since the present wireless sensing program adopts all the technical solutions of all the embodiments described above when it is executed by a processor, it has at least all the advantageous effects brought by all the technical solutions of all the embodiments described above, which will not be described in detail here.

In addition, an embodiment of the present application proposes a computer-readable storage medium having stored thereon a wireless sensing program that, when executed by a processor, implements the wireless sensing method according to the above embodiments.

Since the present wireless sensing program adopts all the technical solutions of all the embodiments described above when it is executed by a processor, it has at least all the advantageous effects brought by all the technical solutions of all the embodiments described above, which will not be described in detail here.

In contrast to the prior art, the wireless sensing method, apparatus, communication device and storage medium proposed by the embodiments of the present application establish a real-time state machine model for the sensing object; based on the real-time state machine model, an environmental state of the sensing object is determined. Thus, by utilizing a wireless sensing method based on real-time modeling of a state machine in complex multipath environments, the problems of multipath interference in complex environments such as indoors urban areas, as well as the inability to effectively achieve wireless sensing when the number of receiver antennas is limited or the bandwidth is narrow, are overcome. This enhances the accuracy of wireless sensing in complex multipath environments.

Herein, the terms "comprise", "comprising", or any other variation thereof, are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the sentence "comprising a..." does not exclude the existence of another identical element in a process, method, article or device including the element.

The above-described sequence numbers of the embodiments of the present application are merely illustrative and do not represent the superiority or inferiority of the embodiments.

From the above description of the embodiments, those skilled in the art will clearly understand that the methods of the above embodiments can be implemented by software and a necessary general hardware platform, and of course, it can also be implemented by hardware, but the former is a preferred implementation mode in many cases. Based on this understanding, the technical solution of the present application essentially or the part that contributes to the prior art can be embodied in the form of a software product, and the computer software product is stored in a storage medium (such as ROM/RAM, magnetic disk, optical disk) as described above. The computer software product includes several instructions for causing a communication device (which may be a mobile phone, a computer, a server, a controlled terminal, or a network device, etc.) to perform the method of each embodiment of the present application.

The above description is only preferred embodiments of the present application and is not intended to limit the scope of the present application, and variations of equivalent structures or equivalent processes using the description and drawings, or directly or indirectly applied to other related fields, are intended to be included within the scope of the present application.

**Claims**

1. A wireless sensing method, comprising:

    building a real-time state machine model for a sensing object; and
    determining, based on the real-time state machine model, an environmental state of the sensing object.

2. The method according to claim 1, wherein building the real-time state machine model for the sensing object comprises:
    performing real-time sensing modeling on the sensing object by a state machine, acquiring a switching mode of the state machine, and updating the real-time state machine model.

**3.** The method according to claim 2, wherein performing real-time sensing modeling on the sensing object by the state machine, acquiring the switching mode of the state machine, and updating the real-time state machine model comprises:

collecting a sensing signal of an antenna;
acquiring, based on the sensing signal of the antenna, a channel impulse response of the antenna; and
acquiring, based on the channel impulse response of the antenna and current information of the state machine, the switching mode of the state machine, and updating the real-time state machine model.

**4.** The method according to claim 3, wherein acquiring, based on the channel impulse response of the antenna and the current information of the state machine, the switching mode of the state machine comprises:

recording a current state, a temporary state, and timer information of the state machine; and
acquiring, based on the channel impulse response of the antenna as well as the current state, the temporary state and the timer information of the state machine, the switching mode of the state machine.

**5.** The method according to claim 4, wherein the switching mode of the state machine comprises at least one of the following:

maintaining a current state;
switching to a historical existing state; and
switching to a new state.

**6.** The method according to claim 5, wherein prior to acquiring the switching mode of the state machine, further comprising:
determining a switching mode of the state machine.

**7.** The method according to claim 6, wherein a mode for determining that the state machine maintains a current state comprises at least one of the following:

a count value of a timer does not exceed a set time threshold value;
a channel impulse response of the antenna at a current moment is not similar to a temporary state of the state machine at the current moment, and a timer is reset; and
a channel impulse response of the antenna at a current moment is similar to a temporary state of the state machine at the current moment, and a timer continues counting.

**8.** The method according to claim 6, wherein a mode for determining that the state machine switches to a historical existing state comprises at least one of the following:

a count value of a timer exceeds a set time threshold value;
a channel impulse response of the antenna at a current moment is similar to a temporary state of the state machine at the current moment, and the temporary state is not similar to a current state;
all states saved in the state machine are traversed, the similarity between a temporary state and each state saved in the state machine is compared, and there is state similar to the temporary state among all the saved states;
a temporary state and a current state number are changed into a state and a number corresponding to a maximal similarity existing in the state machine respectively; and
a timer is not reset.

**9.** The method according to claim 6, wherein a mode for determining that the state machine switches to a new state comprises at least one of the following:

a count value of a timer exceeds a set time threshold value;
a channel impulse response of the receiving antenna at a current moment is similar to a temporary state of the state machine at the current moment, and the temporary state is not similar to all states saved in the state machine, and the state machine generates a new state, and switches to the new state; and
a timer is not reset.

**10.** The method according to claim 7, 8 or 9, wherein a mode for determining whether the channel impulse response of the receiving antenna at the current moment is similar to the temporary state of the state machine at the current moment comprises:

calculating a similarity between the channel impulse response of the receiving antenna at the current moment and the temporary state of the state machine at the current moment;
wherein in response to that the similarity does not exceed a preset similarity threshold value, determining that the channel impulse response of the receiving antenna at the current moment is not similar to the temporary state of the state machine at the current moment; and
in response to that the similarity exceeds a preset similarity threshold value, determining that the channel impulse response of the receiving antenna at the current moment is similar to the temporary state of the state machine at the current moment.

11. The method according to claim 10, wherein calculating the similarity between the channel impulse response of the receiving antenna at the current moment and the temporary state of the state machine at the current moment comprises at least one of the following:

calculating a correlation value between the channel impulse response of the receiving antenna at the current moment and the temporary state of the state machine at the current moment, and taking a maximum correlation peak as a similarity contrast; and
calculating an included angle between the channel impulse response of the receiving antenna at the current moment and the temporary state of the state machine at the current moment, and taking the cosine of the included angle as a similarity contrast.

12. The method according to claim 3, wherein the step of updating the real-time state machine model comprises:
performing, based on the switching mode of the state machine, an update operation on the real-time state machine model.

13. The method according to claim 12, wherein performing, based on the switching mode of the state machine, the update operation on the real-time state machine model comprises at least one of the following:

corresponding to that the state machine maintains a current state, updating a temporary state of the state machine to a channel impulse response of the antenna at a current moment and resetting a timer upon the condition that the channel impulse response of the antenna at the current moment is not similar to the temporary state of the state machine at the current moment;
corresponding to that the state machine maintains a current state, continuing keeping a timer counting upon the condition that a channel impulse response of the antenna at a current moment is similar to a temporary state of the state machine at the current moment;
corresponding to that the state machine switches to a historical existing state, performing a switching operation of the state machine, changing a temporary state and a current state number to a state and a number corresponding to a maximal similarity existing in the state machine, not resetting the timer, and recording switching information of the state machine; and
corresponding to that the state machine switches to a new state, performing a new state generating operation and a switching operation of the state machine, not resetting the timer, and recording switching information of the state machine.

14. The method according to claim 13, further comprising:
saving a current state of the state machine.

15. The method according to claim 1, wherein determining, based on the real-time state machine model, the environmental state of the sensing object comprises:

extracting real-time modeling information of the state machine from the real-time state machine model;
determining, based on the real-time modeling information of the state machine, a state type of the sensing object; and
determining, based on the state type of the sensing object, the environmental state of the sensing object.

16. The method according to claim 15, wherein the real-time modeling information of the state machine comprises at least one of the following:

a historical switching record of the state machine;
a current state of the state machine;
a temporary state of the state machine; and
timer information of the state machine.

17. The method according to claim 15, wherein the state type of the sensing object comprises at least one of the following:

the sensing object is unstable in a current state;
the sensing object is stable in a current state, and is changed relative to a last stable state; and
the sensing object is stable in a current state, and is not changed relative to a last stable state.

18. The method according to claim 17, wherein determining, based on the state type of the sensing object, the environmental state of the sensing object comprises:

for the sensing object in an unstable state, calculating differential information between channel impulse responses of the antenna and current states of the state machine at different moments; and
determining an environmental state change law of the sensing object according to the differential

**EP 4 503 712 A1**

information.

19. The method according to claim 18, wherein the step of determining the environmental state change law of the sensing object according to the differential information comprises:

    analyzing the differential information to extract a differential signal feature in the differential information;
    plotting, based on the differential signal feature, a state change curve; and
    determining the environmental state change law of the sensing object according to the state change curve.

20. The method according to claim 19, wherein the differential signal feature comprises at least one of the following: phase, amplitude and time period.

21. A communication device comprising a memory, a processor, and a wireless sensing program stored on the memory and executable on the processor, the wireless sensing program when executed by the processor implementing the wireless sensing method according to any one of claims 1-20.

22. A computer readable storage medium having stored thereon a wireless sensing program that when executed by a processor implements the wireless sensing method according to any one of claims 1-20.

Fig. 1

Fig. 2

| |
|---|
| Build a real-time state machine model for a sensing object |

S10

| |
|---|
| Determine an environmental state of the sensing object based on the real-time state machine model |

S20

Fig. 3

P1

P2

t1, a1

t2, a2

Tn

P3

t3, a3

BS

t4, a4

Br

P4

Fig. 4

Perform real-time sensing modeling on the sensing object by a state machine, acquire a switching mode of the state machine, and update a real-time state machine model ⌐ S101

Extract real-time modeling information of the state machine from the real-time state machine model ⌐ S201

Determine a state type of the sensing object based on the real-time modeling information of the state machine ⌐ S202

Determine the environmental state of the sensing object based on the state type of the sensing object ⌐ S203

Fig. 5

Fig. 6

Fig. 7

Fig. 8

S1

R(t+δ)

R(t+2δ)

（1）

（2）

（3）

subtract

→

t

（4）

Fig. 9

S0　　　　S1　　　　S2　　　　S3　　　　S4

Morning $S'$　Noon $S'$　Afternoon $S'$　Evening $S'$　Midnight

Fig. 10

Wireless sensing apparatus

Sensing modeling module

State determination module

Fig. 11

## INTERNATIONAL SEARCH REPORT

| International application No. |
|---|
| **PCT/CN2023/083516** |

**A. CLASSIFICATION OF SUBJECT MATTER**

H04W 24/06(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, 3GPP: 无线, 感知, 传感, 状态机, 模型, 环境, 信道, 幅度, 相位, wireless, sensor, sensing, channel, environment, state machine, model, amplitude, phase

**C. DOCUMENTS CONSIDERED TO BE RELEVANT**

| Category* | Citation of document, with indication, where appropriate, of the relevant passages | Relevant to claim No. |
|---|---|---|
| X | CN 107994960 A (PEKING UNIVERSITY (TIANJIN BINHAI) XINYIDAI INFORMATION TECHNOLOGY RESEARCH INSTITUTE) 04 May 2018 (2018-05-04) description, paragraphs 0002-0037 and 0090-0094 | 1-22 |
| A | CN 104471503 A (QUALCOMM INC.) 25 March 2015 (2015-03-25) entire document | 1-22 |
| A | CN 105959988 A (BEIHANG UNIVERSITY) 21 September 2016 (2016-09-21) entire document | 1-22 |
| A | CN 106198868 A (SHENZHEN UNIVERSITY et al.) 07 December 2016 (2016-12-07) entire document | 1-22 |
| A | US 2016077501 A1 (KCF TECHNOLOGIES INC.) 17 March 2016 (2016-03-17) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 June 2023** | **28 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/083516**

| Patent document cited in search report | | | Publication date (day/month/year) | Patent family member(s) | | | Publication date (day/month/year) |
|---|---|---|---|---|---|---|---|
| CN | 107994960 | A | 04 May 2018 | None | | | |
| CN | 104471503 | A | 25 March 2015 | JP | 2015530779 | A | 15 October 2015 |
| | | | | WO | 2014014776 | A1 | 23 January 2014 |
| | | | | EP | 2875413 | A1 | 27 May 2015 |
| | | | | JP | 2018093510 | A | 14 June 2018 |
| | | | | US | 2015016412 | A1 | 15 January 2015 |
| | | | | KR | 20150032740 | A | 27 March 2015 |
| CN | 105959988 | A | 21 September 2016 | None | | | |
| CN | 106198868 | A | 07 December 2016 | WO | 2018006798 | A1 | 11 January 2018 |
| US | 2016077501 | A1 | 17 March 2016 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211035098